## Europäisches Patentamt

## European Patent Office

## Office européen des brevets

(11) Veröffentlichungsnummer: **0 107 097**

**B1**

(12) # EUROPÄISCHE PATENTSCHRIFT

(45) Veröffentlichungstag der Patentschrift:
**01.07.87**

(21) Anmeldenummer: **83109729.0**

(22) Anmeldetag: **29.09.83**

(51) Int. Cl.⁴: **C 09 J 3/16, C 08 L 75/04** //
**C08G18/10, C08G18/64,**
**C08G18/54 ,(C08L75/04, 61:02)**

(54) Schmelzklebstoff.

(30) Priorität: **30.09.82 DE 3236313**

(43) Veröffentlichungstag der Anmeldung:
**02.05.84 Patentblatt 84/18**

(45) Bekanntmachung des Hinweises auf die Patenterteilung:
**01.07.87 Patentblatt 87/27**

(84) Benannte Vertragsstaaten:
**AT BE CH DE FR GB IT LI LU NL SE**

(56) Entgegenhaltungen:
**FR-A-1 401 926**
**FR-A-1 534 567**
**FR-A-2 213 974**
**FR-A-2 232 584**
**US-A-3 267 063**

(73) Patentinhaber: **H.B. Fuller GmbH, Ständlerstrasse 45, D-8000 München 90 (DE)**

(72) Erfinder: **Bernig, Walter, Schleibinger Strasse 3, D-8000 München 80 (DE)**
Erfinder: **Reischle, Ferdinand, Berner Strasse 182, D-8000 München 71 (DE)**
Erfinder: **Windhoff, Jochen, Saleggstrasse 15, D-8000 München 90 (DE)**

(74) Vertreter: **Gille, Christian, Dipl.- Ing., Türk, Gille + Hrabal Patentanwälte Bruckner Strasse 20, D-4000 Düsseldorf 13 (DE)**

EP 0 107 097 B1

LIBER, STOCKHOLM 1987

**Beschreibung**

Schmelzklebstoffe sind bekannt. Sie bestehen aus thermoplastischen Polymeren, die in der Regel modifiziert werden mit Kunst- oder Naturharzen, Wachsen, organischen Füllstoffen usw. Durch Erhitzen auf 100 - 200°C werden sie flüssig. Nach dem aufbringen des geschmolzenen Schmelzklebstoffes auf die zu verklebenden Substrate erstarrt dieser rasch und ergibt eine feste Verklebung.

Die Hauptvorteile von Schmelzklebstoffen gegenüber anderen Klebstoff-Systemen sind das sehr schnelle Abbinden und das Fehlen von Wasser und Lösungsmittel. Der wesentliche Nachteil ist ihr thermoplastisches Verhalten. Sie werden bei erhöhter Temperatur weich bis flüssig, bei tiefen Temperaturen jedoch hart und spröde, so daß die damit hergestellten Klebverbindungen nur in einem mehr oder weniger engen Temperaturbereich belastbar sind.

Dasselbe trifft zu für ebenfalls bekannte Polyurethan-Schmelzklebstoffe. Sie sind teuer und bieten gegenüber üblichen Schmelzklebstoffen auf Basis von Ethylenvinylacetat-Polymerisaten, Polyamiden und Polyterephtalsäureestern nicht die entsprechenden Vorteile. Die Polyurethanschmelzen sind hochviskos. Ihre Stabilität bei der erforderlichen Verarbeitungstemperatur ist schlecht. Anfangsfestigkeit und Wärmefestigkeit sind niedrig. Sie haben nur auf wenigen Materialien eine gute Haftung.

Weiterhin sind lösungsmittelfreie, feuchtigkeitshärtende NCO-Prepolymere bekannt. Bei Raumtemperatur sind diese flüssig bis weichwachsähnlich. Aufgrund der niedrigen Anfangsfestigkeit und der langen Reaktionszeit sind ihre Einsatzmöglichkeiten begrenzt.

Aus der DE-PS 24 01 320 sind aus NCO-Prepolymeren bestehende Schmelzklebstoffe bekannt, welche kombiniert werden mit Ethylen-Vinylacetat, Ethylen-Acrylat-Copolymeren, ataktischen Polypropylen und gesättigten thermoplastischen Polyestern, wie z. B. Polyethylen-terephthalat-Polymeren sowie klebrigmachenden Harzen wie Kolophoniumderivaten oder Terpenphenol-Copolymeren.

Gemische aus diesen Komponenten neigen aber bei bestimmten Mischungsverhältnissen zur Unverträglichkeit oder zur Instabilität der Schmelzen. Ihre Lagerbeständigkeit ist oft nicht ausreichend.

Aufgabe der vorliegenden Erfindung ist es, die geschilderten Nachteile des Standes der Technik zu überwinden und verträgliche, schmelzstabile, bei Abwesenheit von Luftfeuchtigkeit lagerstabile Schmelzklebstoffe zu schaffen, welche eine große anfängliche Haftfestigkeit und eine hohe Thermostabilität aufweisen.

Diese Aufgabe wird erfindungsgemäß durch Schmelzklebstoffe gelöst, die aus einem Gemisch bestehen, das ein präpolymeres Isocyanat, gegebenenfalls ein thermoplastisches Polymer und ferner ein niedrigmolekulares Kunstharz enthält, und zwar in folgender Zusammensetzung:
a) 20 bis 90 Gew-% präpolymeres Isocyanat und
b) 0 bis 75 Gew-% eines thermoplastischen Polyurethans und
c) 5 bis 50 Gew-% eines niedrigmolekularen Kunstharzes aus der Gruppe der Ketonharze und/oder Keton-Aldehydkondensationsharze und/oder Hydrierungsprodukte von Acetophenon-Kondensationsharzen.

Anstelle von thermoplastischen Polyurethan kann das Gemisch auch 10 bis 70 Gew-% eines thermisch stabilen oder stabilisierten thermoplastischen Polyesters enthalten, der vorzugsweise ein Ester auf Basis von Terephtalsäure, Dicarbonsäuren und Diolen ist und möglichst wenig Hydroxylgruppen enthält.

Bei Verwendung von Kristallinen, thermoplastischen Polyestern anstelle von thermoplastischem Polyurethan erhält man schnell abbindende Schmelzklebstoffe mit höherer Anfangsfestigkeit.

Derartige Schmelzklebstoffe sind besonders zum Verkleben anorganischer und organischer Substrate geeignet. Sie eignen sich aber in gleicher Weise auch zum Verkleben von thermoplastischen und duroplastischen Kunststoffen, Schaumstoffen, lackierten Oberflächen, Holz und Holzwerkstoffen, Papier, Leder, Kunstleder, Gummi, Textilien, Non-Woven-Materialien und Metallen.

Nicht alle Polyester sind für die erfindungsgemäßen Schmelzklebstoffe geeignet. Geeignet sind solche Polyester, die möglichst wenig Hydroxylgruppen enthalten. Polyester mit hoherem Anteil von Hydroxylgruppen ergibt zu hoch viskose bis unschmelzbare Produkte und sind somit ungeeignet für Schmelzklebstoffe.

Ein weiterer Gegenstand der Erfindung sind Schmelzklebstoffe nach Anspruche 1, bestehend aus einem Gemisch aus
a. (50-80 Gew-% eines Prepolymeren Isocyanats)
b. (0-2 Gew-% eines thermoplastischen Polyurethans)
c. (20-50 Gew-% eines niedrig molekularen Kunatharzes)

Derartige Klebstofformulierungen sind wegen ihrer niedrigen Viskosität zum Spritzauftrag geeignet und können mit besonderem Vorteil für die Verklebung von Schaumstoffen miteinander oder von Schaumstoffen mit Non-Woven-Materialien, Textilien, Kunstleder, Leder etc. verwendet werden.


**Herstellung der prepolymeren Isocyanate (A)**

Die in dem erfindungsgemäßen Kleber verwendeten reaktiven Polyurethanprepolymere können bestehen aus
1. aromatischen Diisocyanaten wie 4,4'-Diphenylmethan-diisocyanat, wie 2,4 Toluoldiisocyanat oder aus aliphatischen bzw. cycloaliphatischen Diisocyanaten wie z. B. Diisocyanatohexan oder Diisocyanatoisophoron oder Gemischen dieser Verbindungen und oder aus

. Prepolymeren der unter 1. genannten Diisocyanate mit kurzkettigen Diolen mit endständigen primären oder sekundären oH-Gruppen wie Ethylenglykol bis Hexandiol 1,6 oder Propylenglykol bis Hexapropylenglykol oder Diethylenglykol bis Hexaethylenglykol oder aus Gemischen dieser Verbindungen und

3. linearen oder leicht verzweigten Polyethern mit endständigen primären oder sekundären oH-Gruppen im Molekulargewichtsbereich von 1000 - 3000 oder mit linearen oder leicht verzweigten Polyestern im Molekulargewichtsbereich von 1000 - 3000 oder Polycaprolactodiolen im Molekulargewichtsbereich von 1000-3000 und aus

4. kurzkettigen Diolen mit endständigen primären oder sekundären oH-Gruppen, wie sie unter 2. genannt wurden.

Das in dem erfindungsgemäßen Kleber verwendete reaktive Polyurethanprepolymer liegt in einem Viskositätsbereich von ca. 50 Pa.s bis ca. 40000 Pa.s, insbesondere von 5000 bis 40000 Pa.s, bei 20°C bei NCO-%-Gehalten von ca. 1,0 bis ca. 7,5 %, insbesondere von 2 - 5 %.

Die Herstellung erfolgt auf folgende Weise:

Man legt das Diisocyanat und/oder das Diisocyanatprepolymer vor, erhitzt es auf 50 - 70°C und versetzt es mit der gewünschten Menge einer unter A 3. genannten Polyolkomponente, danach wird eines der unter A 4. genannten kurzkettigen Diole zugegeben, wobei die Mischung 1-3 Stunden lang auf 80 bis 120°C gehalten wird.

Die Mengenverhältnisse der Komponenten:

| | |
|---|---|
| 1 | Mol Diisocyanatkomponenten |
| 0,05 - 0,5 | Mol Polyolkomponenten |
| 0,1 - 0,4 | Mol kurzkettige Diol-Komponenten. |

## Herstellungsbeispiel

410 g eines Diisocyanatprepolymers auf Basis von 4,4'-Diphenylmethandiisocyanat und Tripropylenglykol (handelsübliches Produkt: Desmodur® PF der Fa. Bayer AG) werden vorgelegt und auf 60°C erhitzt, dann werden

516 g eines Polyesterdiols auf Basis von Adipinsäure, Ethylenglykol und Butandiol 1,4 (Molekulargewicht von ca. 2000 und eine oH-Zahl von ca. 55) unter Rühren zugegeben und der Ansatz auf 90°C erwärmt. Danach werden 74 g Tripropylenglykol tropfenweise zugegeben. Es wird darauf geachtet, daß die Temperatur nicht über 110 °C ansteigt. Der Ansatz wird unter Rühren 1 1/2 Stunden auf 110 °C gehalten.

NCO: 2,7 bis 3,2 %.

Viskosität bei 20 °C: 31000 Pa.s (Brookfield HBT).

## Herstellung der thermoplastischen Polyurethane (B)

Das in dem erfindungsgemäßen Kleber verwendete thermoplastische Polyurethan ist aus folgenden Einzelkomponenten aufgebaut:

1. Diisocyanaten, wie z. B. 4,4'-Diphenylmethan-diisocyanat oder 2,4 Toluoldiisocyanat oder 2,6 Toluol-diisocyanat oder Isophorondiisocyanat oder 1,6 Diisocyanatohexan oder aus Gemischen dieser Komponenten und aus

2. Polyolen, wie z. B. linearen oder schwach verzweigten Polyesterdiolen mit endständigen primären oH-Gruppen mit einem Molekulargewicht von 1000 - 3000 oder aus linearen oder schwach verzweigten Polyethern mit endständigen primären oder sekundären oH-Gruppen im Molekulargewichtsbereich von 1000 - 3000 oder aus Polycaprolactodiolen in einem Molekulargewichtsbereich von 1000 - 3000 und gegebenenfalls aus

3. kurzkettigen Diolen mit endständigen primären oder sekundären oH-Gruppen wie z. B. Ethylenglykol bis Hexandiol 1,6 oder Propylenglykol bis Hexapropylenglykol oder Diethylenglykol bis Hexaethylenglykol oder aus Gemischen dieser Verbindungen.

Das in dem erfindungsgemäßen Kleber verwendete thermoplastische Polyurethan besteht also aus einer oder mehreren der unter 1. genannten Diisocyanatkomponenten, aus einer oder mehreren der unter 2. genannten Polyolkomponenten und gegebenenfalls zusätzlich aus einem oder mehreren der unter 3. genannten kurzkettigen Diolen.

Die Mengenverhältnisse der genannten Komponenten können wie folgt sein:

B 1.  1        Mol Diisocyanat
B 2.  0,2 - 1,0   Mol längerkettiges Diol
B 3.  0,8 - 0,0   Mol kurzkettiges Diol,

wobei die Mengenverhältnisse der Komponenten B 1 - B 3 so gewählt werden, daß das thermoplastische Polyurethan praktisch keine freien OH- und NCO-Gruppen mehr enthält.

Das thermoplastische Polyurethan (B) ist ein bei Raumtemperatur fester, blockfester Stoff mit hoher Kohäsion. Sein Schmelzpunkt ist 70 - 170°C, insbesondere 130 - 135°C. Die Polyol-Komponente des thermoplastischen Polyurethans (B) soll ähnlich zusammengesetzt sein wie die des Prepolymers (A), um eine möglichst gute Verträglichkeit mit dem Prepolymer (A) in allen Temperaturbereichen von -30 bis +170°C zu erzielen. Das thermoplastische Urethan (B) darf keine mit NCO reaktiven Gruppen im Molekül aufweisen, damit die Lagerstabilität des Hotmelts gewährleistet ist.

Das thermoplastische Polyurethan (B) gibt der Schmelzklebstoffmischung eine hohe Festigkeit bei Raumtemperatur. Weiterhin lassen sich ·Schmelz- bzw. Erweichungspunkte und damit die Verarbeitungstemperaturen der erfindungsgemäßen Schmelzklebstoffgemische durch die Mengenanteile des thermoplastischen Urethans (B) in gewünschter Weise einstellen.

Je nach der Höhe seines Anteils ist die Oberfläche der Schmelzklebstoffmischung bei Raumtemperatur leicht klebrig bis blockfest.

## Herstellungsbeispiel für ein thermoplastisches Polyurethan

    404,0 g Polyesterdiol auf Basis von Adipinsäure, Butan-
             diol 1,4 und Ethylenglykol mit einer OH-Zahl von
             ca. 55 und einem Molekulargewicht von ca. 2000
     20,0 g Butandiol 1,4
   <u>109,5 g</u> 4,4'-Diisocyanatodiphenylmethan
   533,5 g

Die Herstellung erfolgt auf folgende Weise:

Man legt das 4,4'-Diisocyanatodiphenylmethan vor, erhitzt es auf 50 - 70°C und versetzt es mit dem Polyesterdiol, erwärmt es unter Rühren auf 80°C und gibt danach tropfenweise Butandiol 1,4 zu.

Der Ansatz wird unter Rühren 5 Stunden bei 80°C gehalten. Es entsteht dabei ein festes, weißes thermoplastisches Polyurethan mit einem Schmelzpunkt von 130°C.

Zur weiteren Modifizierung der Eigenschaften des Schmelzklebstoffes ist der Anteil des niedrigmolekularen Kunstharzes (C) vorgesehen. Sein Erweichungspunkt soll zwischen 60 und 120°C liegen. Das Harz muß mit den beiden Hauptkomponenten des erfindungsgemäßen Schmelzklebstoffes verträglich sein und darf mit den Isocyanat-Gruppen des Prepolymers nicht reagieren. Mit den niedrigmolekularen Kunstharzen lassen sich Eigenschaften wie Hottack, Anfangsfestigkeit, Viskosität, steuern.

## Herstellung des niedrigmolekularen Kunstharzes (C)

Bei den niedrigmolekularen Kunstharzen handelt es sich um Produkte, die üblicherweise hergestellt werden aus:

a) aliphatischen Ketonen wie Aceton oder Methylethylketon, aliphatisch-aromatischen Ketonen wie Acetophenon, Methyl-Naphthylketon, Propiophenon oder kernalkylierten Acetophenonen wie Methyl-, Ethyl-, tert. Butyl- und Cyclohexyl-Acetophenon, cycloaliphatischen Ketonen wie Cyclohexanon oder Methylcyclohexanon oder Gemischen derselben, und Aldehyden·wie z. B. Formaldehyd, Acetaldehyd, Propionaldehyd, Butyraldehyd, Crotonaldehyd, $\beta$-Oxybutyraldehyd bei Molverhältnissen von Keton zu Aldehyd von 1 : 1 bis 2 : 1.

Das niedrigmolekulare Kunstharz kann weiter sein
b) ein Hydrierungsprodukt von Acetonphenon-Kondensationsharzen.

Kunstharze, wie sie erfindungsgemäß verwendet werden können, sind in

1. H. Wagner, H.F. Sarx
   Lack-Kunstharze (4. Auflage 1959)
   Karl Hanser Verlag, München
   Seite 79 - 83

2. Houben-Weyl Bd XIV
   Teil 2
   Georg Thieme Verlag, Stuttgart, 1963
   S. 416 - 424

beschrieben worden.

Mit besonderem Vorteil wird ein helles neutrales, unverseifbares Keton-Aldehyd-Kondensationsharz verwendet. Dieses Harz hat eine Dichte von ca. 1,19, eine Jodfarbzahl in einer 50 %igen Toluollösung von ca. 1,5, eine Säurezahl von ca. 0,1 einen Erweichungspunkt von ca. 79°C.

Das Kunstharz läßt sich gemäß oben erwähnter Literaturstelle (2) aus Acetophenon und Formaldehyd im Molverhältnis 1 : 1 herstellen.

Der erfindungsgemäße Schmelzklebstoff, bestehend aus vvorstehend beschriebenen Komponenten, ist über einen langen Zeitraum (mehr als 8 Monate) stabil und lagerfähig, er ist bei Raumtemperatur fest.

Verarbeitungseigenschaften und Abbindeverhalten entsprechen weitgehend üblichen Schmelzklebstoffen. Die Anfangsfestigkeit ist befriedigend bis gut. Mit fortschreitender Reaktion der NCO-Gruppen mit der Luftfeuchtigkeit nimmt die Bindefestigkeit zu. Der zunächst thermoplastische Hotmelt-Film wird zunehmend flexibler und erreicht einen elastischen Endzustand. Die ausreagierten Schmelzklebstoff-Filme sind unschmelzbar, ihre Elastizität und Festigkeit bleiben in einem breiten Temperaturbereich erhalten. Diese sowie die Verklebungen sind beständig gegen Fette, Öle, Weichmacher, verdünnte Säuren und Laugen und unlöslich in den meisten Lösungsmitteln und Wasser. Durch Variieren der Mengenverhältnisse von Prepolymer, thermoplastischem Polyurethan bzw. Polyester und niedrigmolekularem Harz ist man in der Lage, Verarbeitungs- und Gebrauchseigenschaften in der jeweils erfoderlichen Richtung zu ändern. Erweichungsbereich (Schmelzpunkt), Viskosität und Verarbeitungstemperatur des Hotmelts sind abhängig vom Molekulargewicht und der Beschaffenheit des prepolymeren Isocyanats (A), des thermoplastischen Polyuurethans (B) bzw. Polyesters und dem Schmelzpunkt des niedrigmolekularen Kunstharzes (C).

Die Schmelzviskosität des Schmelzklebstoffes, gemessen bei 150°C mit dem Epprecht Rheomat 15 mit Viskotemp. liegt bei ca. 0,1 bis ca. 800 Pa.s.

Die Vernetzungsgeschwindigkeit ist abhängig vom Aufbau und der Art des eingesetzten prepolymeren Isocyanats (A).

Das prepolymere Polyisocyanat (A) sollte der Hauptbestandteil des erfindungsgemäßen Schmelzklebers sein. Es bedingt die hohe Flexibilität des ausreagierten Films, die gute Kälte- und Wärmefestigkeit, die hohe Beständigkeit gegenüber zahlreichen Agentien wie Lösungsmittel, Fett etc. sowie die ausgezeichnete Adhäsion auf vielen Substraten.

Fällt der Anteil Prepolymer (A) unter 20 Gew.-%, so dominieren die Eigenschaften des thermoplastischen Polymer bzw. Kunstharzanteil. Die Kälte- und Wärmefestigkeit sind schlechter. Die Weichmacher-, Fett- und Lösungsmittelbeständigkeit fällt ab. Bei höheren Prepolymeranteilen (A) als 90 Gew.-% dominiert der Prepolymercharakter. Die Anfangsfestigkeit der nicht ausreagierten Klebstoffmischung liegt in diesem Falle sehr niedrig und die Oberfläche des Films ist nicht blockfest. Erfindungsgemäß werden Anteile von 50 - 75 Gew.-% (A) bevorzugt.

Bereits sehr niedrige Anteile von thermoplastischem Polyurethan (B) bzw Ester beeinflussen das rheologische Verhalten der Schmelze des Prepolymers, so daß es auch auf porösen Substraten nicht wegschlägt. Dieser Effekt kommt bereits bei Anteilen von 2 Gew.-% (B) zum Tragen. Elne wichtige Eigenschaft des thermoplastischen Polyurethans (B) bzw. Polyester ist, daß Anteile in der Größenordnung von 5 - 10 Gew.-% den Erweichungs- und Schmelzpunkt der Klebstoffmischung ganz wesentlich anzuheben vermögen. Die Mischung mit dem zähflüssigen bis weichwachsähnlichen Prepolymeren (A) wird fest und die Schmelze erstarrt schnell. Die Hauptforderung an Hotmelts, beim Abkühlen schnell abzubinden, wird dadurch erreicht. Mit zunehmendem Anteil an (B) steigt die Schmelzviskosität und somlt die Verarbeitungstemperatur der Klebstoffmischung an, die offene Zeit wird verkürzt.

In Klebstoffen, die hohe Anfangsfestigkeiten erfordern und bei denen ein Durchschlagen auf po:ösen Materialien vermieden werden soll, kommt das thermoplastische Polymer (B) in Anteilen von 2 - 75 Gew.-%, vorzugsweise 5 - 55 Gew.-%, zur Anwendung.

Steht eine niedere Schmelzviskosität des Klebstoffs im Vordergrund der anwendungstechnischen Anforderung, so kann das thermoplastische Polymer (B) entweder ganz weggelassen oder in Anteilen unter 2 % mitverwendet werden.

Der Anteil des niedrigmolekularen Kunstharzes (C) verbessert sowohl den Hottack, das Benetzungsvermögen als auch die Abbindegeschwindigkeit der unvernetzten Klebstoffmischung. Insbesondere bewirkt er eine Viskositätserniedrigung. Desbalb sollten mindestens 5 Gew.-% Harzanteil (C) Eingesetzt werden. Bei höheren Anteilen als 50 Gew.-% verschlechtern sich die Gebrauchseigenschaften des Klebstoff-Films, z. B. die Kältefestigkeit und die Fett-, Weichmacher- und Lösungsmittelbeständigkeit, obwohl Kohäsion und Elastizität noch ausreichend sein können. Die erfindungsgemäß bevorzugten Anteile der Komponente (C) liegen etwa zwischen 10- 40 Gew.-%.

Die erfindungsgemäße Klebstoffmischung ist bei Feuchtigkeitsausschluß lagerstabil. Die Verarbeitung erfolgt bei Temperaturen zwischen 90°C und 160°C, je nach Zusammensetzung der Klebstoffmischung und der Temperaturempfindlichkeit des zu verklebenden Substrates.

Zur Verklebung von dünnen Kunststoff-Folien, z. B. Polyäthylenfolien, verwendet man zweckmäßigerweise niedrigviskose Einstellungen mit niedrigen Schmelzpunkten (Beispiel 1, Klebstoff a), die sich bereits bei Temperaturen von 90 - 100°C einwandfrei verarbeiten lassen. Konventionelle, thermoplastische Schmelzklebstoffe mit ausreichender Wärmestandfestigkeit haben wesentlich höhere Verarbeitungstemperaturen, so daß eine Schädigung der Folie nicht auszuschließen ist. Bei handelsüblichen Schmelzklebstoffen mit niedriger Verarbeitungstemperatur ist die Wärmestandfestigkeit der Verklebung schlechter.

Zur Verklebung von porösem Material oder bei Anwendungsfällen, in welchen die Verklebung sofort belastet wird, sind hochviskose Einstellungen mit höheren Erweichungs- und Schmelzpunkten vorteilhaft (Beispiel 2, Klebstoff b) und c).

Die Verarbeitung des Schmelzklebstoffs kann erfolgen mit Rakel, Walzen oder Düsenauftragsgeräten. Besonders geeignet sind Faßschmelzanlagen.

Der erfindungsgemäße Schmelzklebstoff haftet auf vielen organischen und anorganischen Substraten z. B. auf thermoplastischen und duroplastischen Kunststoffen einschließlich Schaumstoffen, auf diversen Lacken, Gummi, Textilien, Non-woven-Materialien, Leder, Holz, Metall und Papier.

Aus folgenden Beispielen sind die Vorzüge des vernetzenden Polyurethan-Schmelzklebstoff ersichtlich:
Zusammensetzung der Klebstoffmischungen in Gew.-%:

|  | erfindungsgem. Beispiele | | | |
|---|---|---|---|---|
|  | a | b | c | d |
| A Präpolymeres Isocyanat gemäß Beispiel S. 7 | 65 | 65 | 50 | 40 |
| B Thermoplastischen Poly-urethan gemäß Bei-spiel S. 9 | 5 | 20 | 30 | - |
| C Niedrigmolekulares Kunstharz (handelsübli-ches Keton-Aldehyd-Kon-densationsprodukt) gemäß Beispiel S. 12 | 30 | 15 | 20 | 5 |
| D Polyphtalsäureester | - | - | - | 55 |

**Anwendungsbeispiel 1**

Verklebung von Polyäthylenfolie

Vorbehandelte LD-PE-Folie (= Low Density Polyethylen) (durch Corona-Vorbehandlung erzielte Oberflächenspannung: 45 dyn/cm) wurde mit 20 g/m$^2$ Schmelzklebstoff beschichtet. Auftragstemperatur: bei Schmelzklebstoff a) ca. 90°C; beim Schmelzklebstoff für Kunststoffe auf Basis von EVA-Harzen war eine Auftragstemperatur von 120°C erforderlich. Auf die mit Klebstoff beschichtete Folie wurde innerhalb von 10 Sekunden ein gleich großer Folienabschnitt aufgelegt und angepreßt. Nach 2 Stunden wurden davon die zur Ermittlung der Trenn-, Wärmestand-und Kältefestigkeit erforderlichen Prüfstreifen abgeschnitten:

In Tabelle 1 wurde der erfindungsgemäße Schmelzklebstoff a) mit einem Spezial-Schmelzklebstoff für Kunststoffe auf Basis von EVA-Harzen verglichen.

**Tabelle 1**

|  | Erfindungsgem. Schmelzkleb- stoff a | Stand der Technik Spezialschmelzkleb- stoff e für Kunststoffe (ISATHERM S 39/3) |
|---|---|---|
| Trennfestigkeit der Verklebung: | | |
| nach 2 Stunden | 1,1 kp | 1,8 kp |
| nach 24 Stunden | 1,8 kp | 1,9 kp |
| nach 48 Stunden | 2,5 kp · | 1,9 kp |
| nach 1 Woche | Folienriß (>3,2 kp) | 1,85 kp |
| Wärmestandfestig- keit (nach 4 Tagen) | | |
| bei 50°C | 3 mm nach 24 Std. | 1 min. |
| bei 70°C | 66 min | 1/2 min. |
| Kältefestigkeit der Verklebung | | |
| bei -10°C | kein Adhäsions- abfall | platzt ab |
| bei -20°C | kein Adhäsions- abfall | platzt ab |

**Meßmethoden**

Zur Ermittlung der Trennfestigkeit wurden jeweils 15 mm breite verklebte Prüfstreifen an der Reißmaschine abgeschält.

Vorschub: 200 mm/min.

Wärmestandfestigkeit: 30 mm breite verklebte Prüfstreifen wurden im Umluft-Trockenschrank bei der jeweiligen Prüftemperatur mit einem 300 g-Gewicht belastet und die Zeit gemessen, bei welcher sich der Prüfstreifen um 60 mm abschält.

Die Kältefestigkeit wurde manuell geprüft. 30 mm breite, verklebte Prüfstreifen wurden jeweils 1 Std. im Klimaschrank bei tiefen Temperaturen gelagert, dann wurde die Probe ruckartig belastet. Es wurde registriert, ob die Prüfstreifen in der Klebefuge delaminieren.

Kältebruchtemperatur: Im Klimaschrank wird auf ein Brett eine 10 mm dicke, 100 mm breite Stahlplatte auf seiner Schmalseite aufgestellt. Ein 30 mm breiter, 600µm starker Schmelzklebstoff-Film wird mit Klebestreifen in der Art befestigt, daß er etwa in seiner halben Länge auf dem Brett liegt. Die zweite Hälfte des Schmelzklebstoff-Films ist senkrecht zu dem auf dem Brett fixierten Teil auf die Stahlplatte geklebt. Nach 1 Std. wird die Stahlplatte umgestoßen, so daß der Klebstoff-Film geknickt wird. Wenn der Klebstoff-Film nicht bricht, wird die Temperatur des Klimaschranks um 2° gesenkt und die Prozedur so oft wiederholt, bis der Film bricht.

Die Viskosität des Schmelzklebstoffs wurde mit dem Epprecht Rheomat 15 plus Viskotemp gemeßsen.

**Anwendungsbeispiel 2**

Verklebung von steifen Substraten (Holz).

Es wurden die Klebstoffe b, c und f mit einem üblichen Schmelzklebstoff zur Verklebung von Möbelkanten verglichen.

Die Prüfkörper, aus Rotbuche gedämpft, wurden nach der in der Methode WPS 68 zur Bestimmung der Wärmestandfestigkeit von Möbel-Schmelzklebstoffen beschriebenen Weise hergestellt.

Die Scherfestigkeit wurde nach DIN 53 254 ermittelt, die Wärmestandfestigkeit nach der WPS 68.

Die Bruchdehnung und Bruchfestigkeit wurde mit 600 µm dicken, 25 mm breiten Klebstoff-Filmen auf der Reißmaschine bestimmt. Die Einspannlänge der Filme war 30 mm, der Vorschub 200 mm/min.

**Tabelle 2**

| | Erfingungsgem. Klebst. b) | Klebst. c) | Klebst. d) | Stand der Technik Klebstoff f) handelsüblicher Möbelschmelzkleb (Rakoll-Schmelz-kleber K 570) |
|---|---|---|---|---|
| Scherfestigkeit der Verklebung: | | | | |
| nach 2 Std. | 10 kp/4cm² | 23 kp/4cm² | 99 kp/4cm² | 64 kp/4cm² |
| nach 8 Std. | 38 kp/4cm² | 203 kp/4cm² | 155 kp/4cm² | 68 kp/4cm₂ |
| nach 24 Std. | 207 kp/4cm² | 213 kp/4cm² | 202 kp/4cm² | 69 kp/4cm² |
| | Holzausriß | Holzausriß | | |
| Wärmestand-festigkeit der Verklebung: nach WPS 68: | | | | |
| nach 2 Std. | 35-40°C | 45-50°C | 50-55°C | 65-70°C |
| nach 24 Std. | 170-175°C | 180-185°C | 160-165°C | 65-70°C |
| nach 48 Std. | 205-210°C | 210-215°C | 170-175°C | 65-70°C |

Aus Tabelle 1 und 2 ist ersichtlich, daß die Bindefestigkeit des erfindungsgemäßen Schmelzklebstoffes nach vollständiger Vernetzung sowohl bei Raumtemperatur als auch bei hohen und tiefen Temperaturen konventionellen Schmelzklebstoffen überlegen ist.

In Tabelle 3 wurden weitere physikalische Eigenschaften zusammengefaßt.

**Tabelle 3**

| | a | b | c | e Kunstst. Schm.kl. | f Möbel-Schm.kl | d |
|---|---|---|---|---|---|---|
| Viskosität | | | | | | |
| bei 120°C | 5Pa.s | 100Pa.s | 2000Pa.s | 14,0Pa.s | 1600Pa.s | 3000Pa.s |
| bei 150°C | 0,2Pa.s | 9Pa.s | 160Pa.s | 4,5Pa.s | 490Pa.s | 900Pa.s |
| Schmelzpunkt | | | | | | |
| nach 2 Std. | 67°C | 90°C | 92°C | 68°C | 100°C | 115°C |
| n. 24 Std. | 110°C | us[1] | us[1] | | | us[1] |
| n. 48 Std. | us[1] | us[1] | us[1] | | | us[1] |
| Bruchdehng. | 420 % | 470 % | 480 % | 490 % | 540 % | 520 % |
| Bruchfestigkeit | 13,6 kp | 15,0 kp | 17,4 kp | 1,4 kp | 6,0 kp | 10,64 kp |
| Kältebruch-Temperatur | < -35°C[2] | < -35°C[2] | < -35°C[2] | -15°C | -28°C | -35°C |

1) us = unschmelzbar
2) bei tieferen Temperaturen als -35°C konnten die Schmelzklebstoff-Filme nicht geprüft werden. Die Filme von Klebstoff a, b und c sind bei -35°C flexibel, die Filme der EVA-Harz-Klebstoffe d und e sind sprödhart.

Die vernetzten Schmelzklebstoff-Filme sind weitgehend beständig gegen Lösungsmittel, Öle, Fette, Weichmacher, verdünnte Säuren und Laugen.

So wurden 14 Tage alte Verklebungen von PE-Folien mit Klebstoff b) in verschiedenen Lösungsmitteln gelagert (Lagerzeit 5 Wochen) und nach 24 Stunden Ablüften der in der Klebefuge verbliebenen Lösungsmittel an der Zugprüfmaschine die Trennfestigkeit gemessen.

Breite der Prüfstreifen 15 mm.

Es ergaben sich folgende Werte:

| Lösungsmittel | Trennfestigkeit von PE-Verklebung nach 5wöchiger Lagerung in nebenstehenden Lösungsmitteln | | |
|---|---|---|---|
| - | 3,2 | kp/15 mm | Filmriß |
| Spezialbenzin 60/95 | 2,8 | " | |
| Toluol | 3,2 | " | |
| Ethylacetat | 3,2 | " | Filmriß |
| Aceton | 2,9 | " | " |
| Trichlorethylen | 3,1 | " | " |

| | Trennfestigkeit von PE-Verklebung nach 4wöchiger Lagerung in nebenstehenden Medien | | |
|---|---|---|---|
| Dibutylphthalat | 2,8 | kp/15 mm | Filmriß |
| Dioctylphthalat | 2,9 | " | " |
| wässrige Schwefelsäure, 2n | 3,2 | " | " |
| wässrige Salpetersäure, 2n | 2,2 | " | " |
| wässrige Kalilauge, 2n | 3,2 | " | " |
| Wasser | 2,8 | " | " |

Weichmacherbeständigkeit

Weich-PVC-Folie mit 30 % DOP wurde mit Klebstoff b und dem Spezialschmelzklebstoff für Kunststoffe d verklebt.

Die verklebten Streifen wurden 4 Tage bei 50°C im Trockenschrank gelagert und nach dem Auskühlen auf Raumtemperatur die Trennfestigkeit gemessen (Breite der Prüfstreifen 30 mm).

Die mit Klebstoff b verklebten Proben ergaben Werte von 2,8 kp. Die mit dem Spezialklebstoff (d) auf Basis von EVA-Harzen verklebten Proben waren delaminiert. Der Klebstoff wurde durch Aufnahme von Weichmacher aus dem PVC weich und schmierig.

**Patentansprüche**

1. Schmelzklebstoff, bestehend aus einem Gemisch, das ein prepolymeres Isocyanat, ein niedrigmolekulares Kunstharz und gegebenenfalls ein thermoplastisches Polymer enthält,
dadurch gekennzeichnet, daß das Gemisch folgende Komponenten enthält:
a) 20 bis 90 Gew.-% prepolymeres Isocyanat,
b) 0 bis 75 Gew.-% eines thermoplastischen Polyurethans, das aus Diisocyanaten, Polyolen mit einem Molekulargewicht von 1000 bis 3000 und gegebenenfalls kurzkettigen Diolen mit endständigen primären oder sekundären OH-Gruppen besteht, wobei die Mengenverhältnisse dieser Komponenten so gewählt sind, daß das thermoplastische Polyurethan praktisch keine freien OH- und NCO-Gruppen enthält, und einen Schmelzpunkt von 70 bis 170°C aufweist, und
c) 5 bis 50 Gew.-% eines niedrigmolekularen Kunstharzes aus der Gruppe der Keton-Aldehyd-Kondensationsharze und/oder Hydrierungsprodukte von Acetophenon-Kondensationsharzen.

2. Schmelzklebstoff nach Anspruch 1, dadurch gekennzeichnet, daß das Gemisch 10 bis 70 Gew-% eines thermoplastischen Polyesters enthält.

3. Schmelzklebstoff nach Anspruch 2, dadurch gekennzeichnet, daß der Polyester ein Ester auf Basis von Therephtalsäure, Dicarbonsäuren und Diolen ist und möglichst wenig Hydroxylgruppen aufweist.

4. Schmelzklebstoff nach Anspruch 1, dadurch gekennzeichnet, daß das Gemisch folgende Komponenten enthält:
a) 50 bis 80 Gew-% prepolymeres Isocyanat
b) 0 bis 2 Gew-% thermoplastisches Urethan und
c) 20 bis 50 Gew-% niedrigmolekulares Kunstharz.

5. Verwendung des Schmelzklebstoffes nach einem der Ansprüche 1 bis 3 zum Verkleben anorganischer und organischer Substrate.

6. Verwendung des Schmelzklebstoffes nach einem der Ansprüche 1 bis 3 zum Verkleben von thermoplastischen und duroplastischen Kunststoffen, Schaumstoffen, lackierten Oberflächen, Holz und Holzwerkstoffen, Papier, Leder, Kunstleder, Gummi, Textilien, Non-Woven - Materialien und Metallen.

7. Verwendung des Schmelzklebstoffes nach Anspruch 4 zum Verkleben von Schaumstoffen miteinander oder von Schaumstoffen mit Non - Woven - Materialien oder Textilien.


## Claims

1. Adhesive fusible consisting of a composition comprising a prepolymer isocyanate, a lower molecular synthetic resin and optionally a thermoplastic polymer,
characterized in that
the composition comprises the following components:
a) 20 to 90 % by weight of prepolymer isocyanate,
b) from about 0 to 75 % by weight of a thermoplastic polyurethane consisting of diisocyanates, polyolen with a molecular weight of from about 1,000 to 3,000 and optionally shortbranched diolens with end-position primary or secondary OH-groups, whereby the quantity ratio of said components is selected such that the thermoplastic polyurethane practically does not contain any free OH- and NCO-groups and has a melting point of from about 70 to 170°C, and
c) further comprising from about 5 to 50 % by weight of a lower molecular synthetic resin selected from the group containing ketone-aldehyde-condensation resins and/or hydration products of acetophenone condensation resins.

2. Adhesive fusible as defined by claim 1,
characterized in that
the composition contains from about 10 to 70 % by weight of a thermoplastic polyester.

3. Adhesive fusible as defined by claim 2,
characterized in that
the polyester comprises an ester on the basis of therephtalic acid, dicarbonic acids and diolene and comprises a minimum of hydroxyl groups.

4. Adhesive fusible as defined by claim 1,
characterized in that
the composition comprises the following components:
a) of from about 50 to 80 % by weight of prepolymer isocyanate,
b) of from about 0 to 2 % by weight of thermoplastic urethane, and
c) of from about 20 to 50 % by weight of lower molecular synthetic resin.

5. Utilization of the adhesive fusible as defined by either of claims 1 to 3 for cementing inorganic and organic substrates.

6. Utilization of the adhesive fusible defined by either of claims 1 to 3 for cementing thermoplastic and duroplastic synthetic materials, aerated plastic, varnished surfaces, wood and wooden materials, paper, leather, synthetic leather, rubber, textiles, non-woven materials end metals.

7. Utilization of the adhesive fusible defined by claim 4 for cementing aerated plastics with one antoher or of aerated plastics with non-woven materials or textiles.


## Revendications

1. Adhésif fusible, constitué d'un mélange qui contient un prépolymère isocyanate, une résine synthétique à bas poids moléculaire et le cas échéant un polymère thermoplastique, caractérisé en ce que le mélange contient les composants suivants:
a) 20 à 90 % en poids de prépolymère isocyanate.
b) 0 à 75 % en poids d'un polyuréthanne thermoplastique qui est constitué de diisocyanates, polyols avec un poids moléculaire de 1000 à 3000 et le cas échéant de diols à chaîne courte avec des groupes terminaux OH primaires ou secondaires, dans lequel les rapports quantitatifs de ces composants sont choisis de telle façon que le polyuréthanne thermoplastique ne contient pratiquement aucuns groupes libres OH et NCO et présente un point de fusion de 70 à 170°C, et
c) 5 à 50 % en poids d'une résine synthétique de bas poids moléculaire du groupe des résines de condensation cétone-aldéhyde et/ou des produits d'hydrogénation des résines de condensation d'acétophénone.

2. Adhésif fusible selon la revendication 1, caractérisé en ce que le mélange contient de 10 à 70 % en poids d'un polyester thermoplastique.

3. Adhésif fusible selon la revendication 2, caractérisé en ce que le polyester est un ester à base d'acide téréphtalique, d'acides dicarboxyliques et de diols et présente le moins possible de groupes hydroxyles.

4. Adhésif fusible selon la revendication 1, caractérisé en ce que le mélange contient les composants suivants:

a) 50 à 80 % en poids de prépolymère isocyanate.

b) 0 à 2 % en poids d'uréthanne thermoplastique et

c) 20 à 50 % en poids d'une résine synthétique de bas poids moléculaire.

5. Utilisation d'adhésif fusible selon l'une des revendications 1 à 3 pour coller des substrats minéraux et organiques.

6. Utilisation de l'adhésif fusible selon l'une des revendications 1 à 3 pour coller des matières thermoplastiques et thermodurcissables, des mousses, des surfaces peintes, du bois et des matériaux à base de bois, du papier, du cuir, du cuir synthétique, du caoutchouc, des textiles, des matériaux non tissés et des métaux.

7. Utilisation de l'adhésif fusible selon la revendication 4 pour coller des mousses l'une à l'autre ou des mousses avec des matériaux non tissés ou des textiles.